# EUROPÄISCHE PATENTANMELDUNG

(11) **EP 2 014 451 A1**
(43) Veröffentlichungstag der Anmeldung: **14.01.2009**
(21) Anmeldenummer: 08157394.1
(22) Anmeldetag: 02.06.2008
(51) Int. Cl.: B29D 30/10, B29D 30/20

(54) **Verfahren zum Aufbau eines Radialreifens**

(30) Priorität: 07.07.2007 DE 102007031758
(71) Anmelder: Continental Aktiengesellschaft, 30165 Hannover (DE)
(72) Erfinder: Lampe, Gerhard, 30453 Hannover (DE)
(74) Vertreter: Finger, Karsten

(57) **Zusammenfassung**

Die Erfindung betrifft ein Verfahren zum Aufbauen eines Radialreifens auf einem Innenkern (10), dessen Außenkontur der Innenkontur des zu fertigenden Rohreifens zumindest weitgehend entspricht, wobei der Rohreifen aus mindestens einer Karkasseinlage (2, 3), zwei Kernpakete aus Wulstkernen (4) mit Kernprofilen (5), einem Gürtelverband (6), gegebenenfalls mit einer Gürtelbandage (6b), einem Laufstreifen (8) sowie Seitenwandteilen (7) aufgebaut wird,

Die Karkasseinlage wird aus zwei Karkasseinlagenteilen (2, 3) gebildet, wobei jeder Karkasseinlagenteil (2, 3) auf einer gesonderten Wickeltrommel (11) aufgelegt wird, auf jedem Karkasseinlagenteil (2, 3) eines der Kernpakete positioniert wird, der axial innere Abschnitt (2a, 3a) des Karkasseinlagenteils (2, 3) zur Bildung eines Hochschlages umgeschlagen wird, die beiden Karkasseinlagenteile (2, 3) mitsamt den Kernpaketen und gegebenenfalls den Seitenwandteilen (7) auf dem Innenkern (10) nacheinander, unter gegenseitiger Überlappung im Zenit des Innenkernes (10), positioniert werden, und anschließend der Gürtelverband (6) und der Laufstreifen (8) aufgebracht werden.

## Beschreibung

Die Erfindung betrifft ein Verfahren zum Aufbauen eines Radialreifens auf einem Innenkern, dessen Außenkontur der Innenkontur des zu fertigenden Rohreifens zumindest weitgehend entspricht, wobei der Rohreifen aus mindestens einer Karkasseinlage, zwei Kempaketen aus Wulstkernen mit Kernprofilen, einem Gürtelverband, gegebenenfalls mit einer Gürtelbandage, einem Laufstreifen sowie Seitenwandteilen aufgebaut wird.

Bei einer konventionellen Fertigung von Radialreifen erfolgt der Aufbau des Rohreifens nach einem mehrstufigen Verfahren, indem eine Reifenkarkasse, insbesondere bestehend aus der Innenschicht, der Karkasseinlage sowie den Wulstkernen und Kemprofilen, auf einer mit ein- und ausfahrbaren Segmenten versehenen Reifenaufbautrommel aufgebaut wird. Die Reifenkarkasse wird durch Innendruck bombiert und derart mit dem Gürtelverband, welcher auf einer gesonderten Gürteltrommel erstellt worden ist, zusammengefügt. Der Laufstreifen wird entweder anschließend aufgebracht oder ist bereits mit dem Gürtelverband zusammen aufgebaut worden. Die Konturierung des Reifens erfolgt erst während der Vulkanisation in einer Vulkanisationsform durch das Einformen in die Reifenheizform. Über den Reifenquerschnitt erfolgt dabei eine ungleichmäßige Dehnung der einzelnen Bauteile im Reifen, beispielsweise der Festigkeitsträger in den Gürtellagen. Die durch die ungleichmäßige Dehnung stattfindenden Materialverschiebungen haben oft Ungleichmäßigkeiten und Ungleichförmigkeiten im fertigen Reifen zur Folge.

Bekannt sind ferner Verfahren und Vorrichtungen zum Aufbau von Reifenrohlingen auf einem stabilen Kern, dessen Außenfläche bereits konturiert ist und der Innenfläche des zu bildenden fertigen Reifens zumindest im Wesentlichen entspricht. Eine derartige Vorrichtung und ein derartiges Verfahren sind beispielsweise aus der US-A-5,616,209 bekannt. Die Karkasseinlage wird aus einem Verstärkungsfaden, welcher mit einer speziellen Einrichtung in Schleifen aufgebracht wird, direkt auf dem Kern gebildet. Dieses bekannte Verfahren ist technisch sehr aufwändig und daher nur bedingt wirtschaftlich.

Der Erfindung liegt die Aufgabe zu Grunde, bei einem Verfahren der eingangs genannten Art einen einfachen und variablen Aufbau des Rohreifens zu gewährleisten, um hinsichtlich ihrer Gleichförmigkeit verbesserte Reifen herstellen zu können.

Gelöst wird die gestellte Aufgabe erfindungsgemäß dadurch, dass die Karkasseinlage aus zwei Karkasseinlagenteilen gebildet wird, wobei jeder Karkasseinlagenteil auf einer gesonderten Wickeltrommel aufgelegt wird, auf dem Karkasseinlagenteil eines der Kempakete positioniert wird, der axial innere Abschnitt des Karkasseinlagenteils zur Bildung eines Hochschlages umgeschlagen wird, die beiden Karkasseinlagenteile mit den Kempaketen und gegebenenfalls den Seitenwandteilen auf dem Innenkern nacheinander, unter gegenseitiger Überlappung im Zenit des Innenkernes, positioniert werden, und anschließend der Gürtelverband und der Laufstreifen aufgebracht werden.

Die Erfindung gestattet auf einfache Weise die Fertigung bzw. den Aufbau eines Rohreifens auf einem stabilen Innenkern, insbesondere durch den Aufbau der Karkasseinlage aus zwei Teilen.

Für die Stabilität und die Fahreigenschaften des aufgebauten Reifens ist es von Vorteil, wenn die gegenseitige Überlappung der Karkasseinlagenteile im Wesentlichen über die Breite des Gürtelverbandes erfolgt.

Es vereinfacht das Aufbauverfahren, wenn auf der Wickeltrommel vor dem Aufbringen der Karkasseinlagenteile jeweils das Seitenwandprofil positioniert wird.

Auch die Innenschicht des Reifens lässt sich bereits auf den Wickeltrommeln aufbauen. Auf eine besonders einfache Weise ist dies dann möglich, wenn die Innenschicht aus zwei Innenschichtteilen aufgebaut wird, von welchen der eine Teil vor dem Auflegen des Karkasseinlagenteils dort positioniert wird, wo der innere Abschnitt des Karkasseinlagenteils aufgelegt wird, und der zweite Teil außerhalb der Position des Kempaketes auf dem Karkasseinlagenteil aufgelegt wird. Wird anschließend der eine Innenschichtteil gemeinsam mit der Karkasseinlage um das Kempaket umgeschlagen, fügen sich die beiden Innenschichtteile zu einer durchgehenden Innenschicht zusammen.

Bei einer alternativen Ausführungsvariante, welche ebenfalls eine einfache Herstellung der Innenschicht ermöglicht, wird diese durch Aufbringen, insbesondere durch Aufsprühen, einer Kautschukmischungslösung auf den Innenkern gebildet.

Das erfindungsgemäße Verfahren gestattet die Fertigung von Reifen unterschiedlicher Querschnittsverhältnisse, wenn ein insbesondere im Bereich des Äquators in zwei oder mehr Teile geteilter Innenkern verwendet wird, dessen Teile in axialer Richtung gegeneinander verschiebbar und in unterschiedlichen Positionen fixierbar sind.

Die Erfindung betrifft ferner einen Fahrzeugluftreifen, welcher nach dem erfindungsgemäßen Verfahren hergestellt ist.

Weitere Merkmale, Vorteile und Einzelheiten der Erfindung werden nun anhand der Zeichnung, die schematisch mehrere Ausführungsbeispiele darstellt, näher beschrieben. Dabei zeigen
Fig. 1 eine Ansicht eines Stadiums während des Aufbaus eines Fahrzeugluftreifens,
Fig. 2 schematisch das Zusammenfügen von Karkasseinlagenteilen mit Kempaketen,
Fig.3 und Fig. 4 Varianten von Verfahrensschritten beim Aufbau und
Fig. 5 einen Querschnitt durch einen gemäß der Erfindung aufgebauten PKW-Radialreifen.

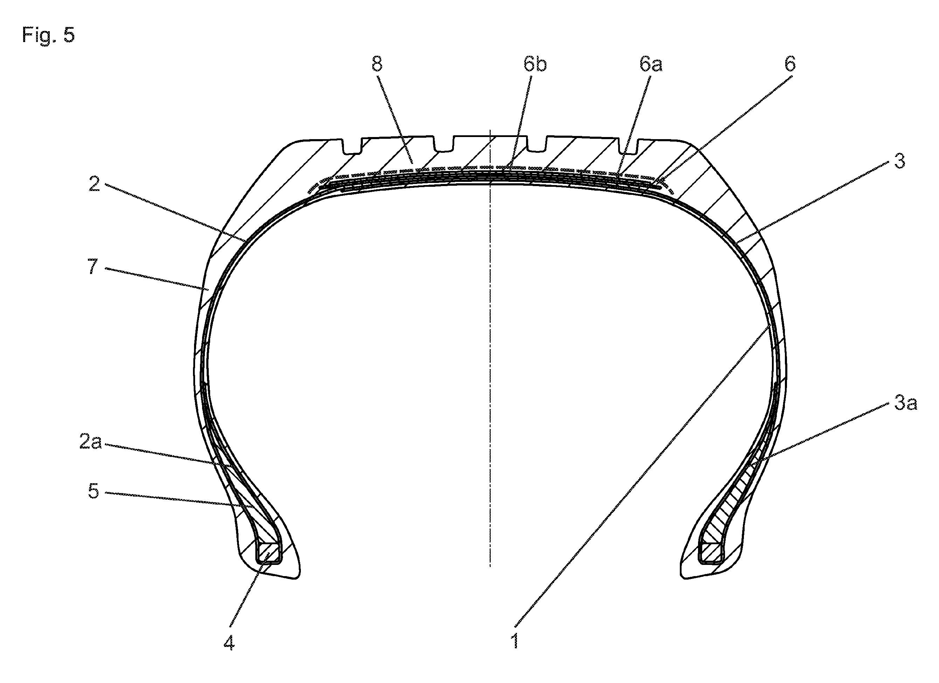

Der in Fig. 5 beispielhaft gezeigte Querschnitt durch einen Radialreifen für Personenkraftwagen zeigt die Hauptbestandteile des Reifens, zu welchen eine luftdichte Innenschicht 1, zwei Karkasseinlagenteile 2, 3, Wulstbereiche mit Wulstkernen 4 und Kemprofilen 5, ein Gürtelverband 6, welcher beispielsweise zwei Gürtellagen 6a und eine Gürtelbandage 6b aufweist, Seitenwände 7 und ein Laufstreifen 8 gehören. Die beiden Karkasseinlagenteile 2, 3 bestehen aus in eine Gummimischung eingebetteten, insbesondere textilen Festigkeitsträgern, die in bekannter Weise in den Seitenwänden 7 in radialer Richtung verlaufen. Die Bandage 6b kann in bekannter Weise eine aus einem Materialstreifen gewickelte Spulbandage sein. Die beiden Karkasseinlagenteile 2, 3 sind um die Wulstkerne 4 und die Kemprofile 5 von axial außen nach axial innen herumgeführt, sodass die freien Endabschnitte, welche die Hochschläge 2a und 3a bilden, axial innerhalb der Kernprofile 5 verlaufen. Jeder Karkasseinlagenteil 2, 3 verläuft in einer der Seitenwände 7 und radial innerhalb des Gürtelverbandes 6, bevorzugt über die gesamte Breite des Gürtelverbandes 6, sodass sich die radial innerhalb des Gürtelverbandes 6 verlaufenden Abschnitte der Karkasseinlagenteile 2, 3 über die Breite des Gürtelverbandes 6 überlappen. Die Wulstkerne 4 können in bekannter Weise aus Stahl bestehen, die auf ihnen sitzenden Kernprofile 5 sind aus einer relativ harten Gummimischung hergestellt. Im fertigen Reifen sind die Gummibestandteile der einzelnen Bauteile ausvulkanisiert. Beim Aufbau des Reifens, wie es nachfolgend näher beschrieben wird, bestehen diese Bauteile aus bzw. weisen diese Bauteile unvulkanisierte(n) Kautschukmischungen auf, wobei die Bauteile auch im Rohzustand entsprechend Fig. 5 benannt sind.

Zum Aufbauen des Reifens wird ein stabiler, insbesondere ein fester und massiver oder weitgehend massiver Innenkern 10 verwendet, dessen Außenkontur der erwünschten Innenkontur des herzustellenden Reifens zumindest weitgehend entspricht. Der Innenkern 10 kann über seinen Umfang mehrteilig und insbesondere derart ausgeführt sein, dass er durch Zusammenklappen seiner Bestandteile aus dem aufgebauten Rohreifen oder aus dem fertig vulkanisierten Reifen entfernt und wieder verwendet werden kann. Zum Abstützen der Wulstbereiche des Reifens beim Aufbau desselben ist der Innenkern 10 mit zwei ringartig umlaufenden Wulststützansätzen 10a versehen.

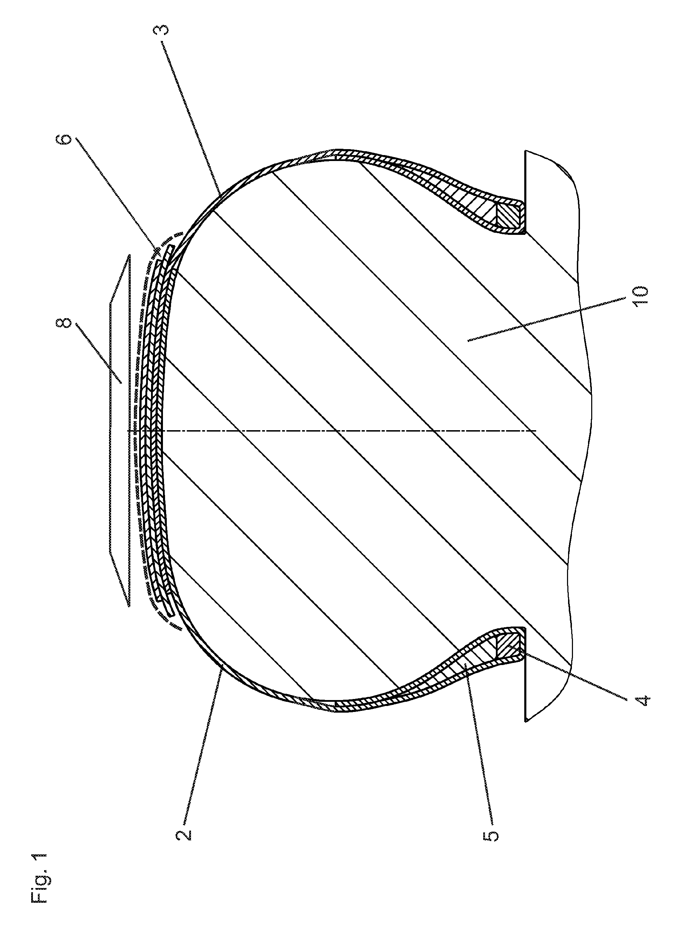

Fig. 1 zeigt den nahezu fertigen, auf dem Innenkern 10 aufgebauten Rohreifen, welcher Kerne 4 mit Kemprofilen 5, die beiden Karkasseinlagenteile 2, 3, zwei Gürtellagen 6a und eine Bandage 6b aufweist. Der beispielsweise als Profil extrudierte Laufstreifen 8 ist noch aufzubringen, ebenso sind die Seitenwände 7 noch zu positionieren.

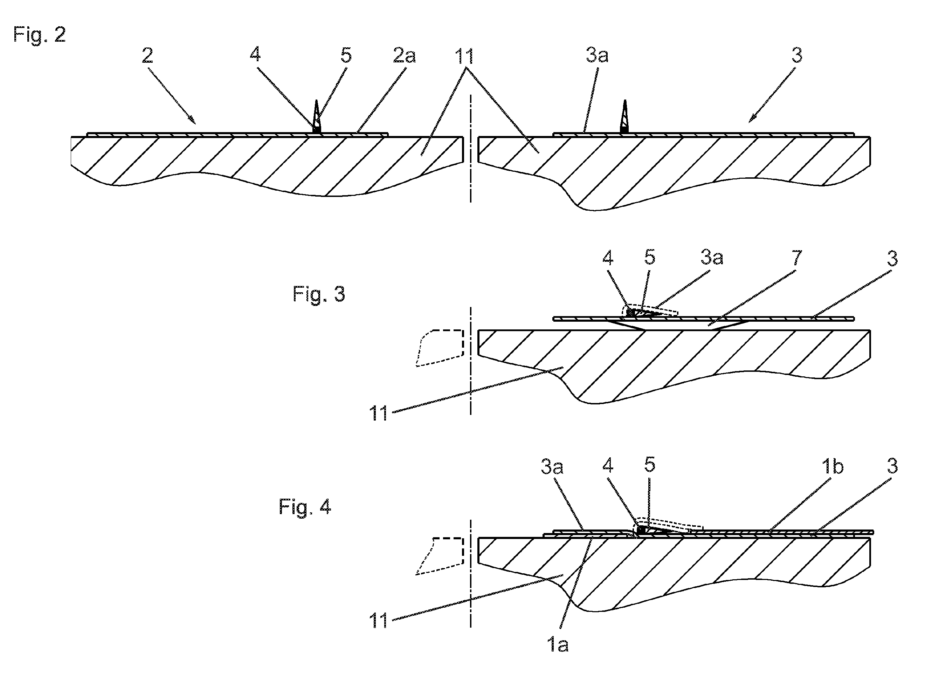

Die beiden Karkasseinlagenteile 2, 3 werden auf gesonderten Wickeltrommeln 11, die in Fig. 2 gezeigt sind und einen zylindrischen Außenumfang aufweisen, mit Kempaketen, bestehend aus den Wulstkernen 4 und den Kemprofilen 5, zusammengefügt. Die Kempakete werden über den auf den Wickeltrommeln 11 umlaufend aufgelegten Karkasseinlagenteilen 2 und 3 entsprechend positioniert. Die beiden axial innen liegenden Abschnitte 2a, 3a der Karkasseinlagenteile 2, 3 werden auf bekannte Weise auf die Kempakete umgeschlagen. Die beiden Karkasseinlagenteile 2, 3 werden mitsamt den Kempaketen von außen und nacheinander über dem Innenkern 10 positioniert. Dabei wird im Reifenzenit ein überlappende Bereich der beiden Karkasseinlagenteile 2, 3, wie in Fig. 1 gezeigt, erstellt. Anschließend werden die beiden Gürtellagen 6a direkt auf die Karkasseinlagenteile 2, 3, den Innenkern 10 umlaufend, aufgebracht und die Bandage 6b durch Spulen eines Materialstreifens erstellt. Alternativ dazu kann der Gürtelverband bestehend aus Gürtellagen und Bandage auf einer gesonderten, insbesondere konturierten Gürtelaufbautrommel aufgebaut und von dieser auf den Innenkern 10 transferiert werden. Auf den aufgebrachten Gürtelverband wird der Laufstreifen 8 gelegt. Dieser kann ein extrudiertes Profil sein oder unmittelbar auf die Gürtelbandage durch Direktextrusion aufgebracht werden. Möglich ist auch ein Aufbau des Laufstreifens aus einem oder mehreren Kautschukmischungsstreifen durch spiraliges Wickeln.

Bei der in Fig. 3 gezeigten Ausführungsvariante ist lediglich eine der beiden Wickeltrommeln 11 dargestellt. Auf der Wickeltrommel 11 wird zuerst das Seitenwandprofil 7 umlaufend aufgelegt und auf dieses der Karkasseinlagenteil 3 positioniert. Das Kempaket bestehend aus Wulstkern 4 und Kemprofil 5 wird liegend positioniert. Der innenliegende Karkassabschnitt 3a wird um das Kempaket umgeschlagen. Die derart zusammengefügten Bauteile werden von der Wickeltrommel 11 auf den Innenkern 10 transferiert.

Fig. 4 zeigt eine Ausführungsvariante, bei der auf der Wickeltrommel 11 die spätere Innenschicht 1 des Reifens gebildet wird. Die Innenschicht 1 wird aus mehreren, insbesondere aus zwei Teilen 1a, 1b erstellt, wobei der Teil 1a als Mischungsplatte dort auf der Trommel 11 positioniert wird, wo anschließend der innenliegende Abschnitt 3a des Karkasseinlagenteils 3 positioniert wird. Nach dem Umschlagen des Abschnittes 3a auf das liegend positionierte Kempaket befindet sich der Teil 1a der Innenschicht 1 an der späteren Innenseite des Reifens. Der zweite Innenschichtteil 1b wird auf dem Karkasseinlagenteil 3 außerhalb der Position des Kempaketes aufgebracht. Bei umgeschlagenen Abschnitt 3a wird derart eine durchgehende Innenschicht 1 gebildet. Die zusammengefügten Bauteile werden anschließend auf dem Innenkern 10 positioniert.

Die Innenschicht kann auch nachträglich in den Reifenrohling durch Aufsprühen einer Kautschukmischungslösung erstellt werden. Eine weitere Möglichkeit zum Bilden der Innenschicht besteht in einem relativ dickschichtigen Aufsprühen einer Kautschukmischungslösung auf dem Innenkern 10 bevor die Reifenbauteile, wie beschrieben, aufgebracht werden.

Es ist ferner möglich, den Innenkern 10 im Bereich seines Äquators und parallel zum Äquator in mehrere Teile, insbesondere Hälften, zu teilen und die Teile gegeneinander verschiebbar anzuordnen, sodass ein gewisser Abstand zwischen den Teilen einstellbar ist. Dies ermöglicht die Fertigung von Reifen unterschiedlicher Querschnittsverhältnisse auf einem mehrteiligen Kern.

Von besonderem Vorteil ist die Möglichkeit, die beiden Karkasseinlagenteile unterschiedlich, etwa mit unterschiedlichen Festigkeitsträgermaterialien, auszuführen. Es besteht ferner die Möglichkeit, den Überlappungsbereich der Karkasseinlagenteile asymmetrisch bezüglich des Reifenäquators zu gestalten.

### Bezugszeichenliste

- 1: luftdichte Innenschicht 1
- 2: Karkasseinlagenteil 2a Abschnitt
- 3: Karkasseinlagenteil
- 3a: Abschnitt
- 4: Wulstkern
- 5: Kernprofil
- 6: Gürtelverband
- 6a: Gürtellage
- 6b: Gürtelbandage
- 7: Seitenwand
- 8: Laufstreifen
- 10: Innenkern
- 11: Wickeltrommel

## Patentansprüche

1. Verfahren zum Aufbauen eines Radialreifens auf einem Innenkern (10), dessen Außenkontur der Innenkontur des zu fertigenden Rohreifens zumindest weitgehend entspricht, wobei der Rohreifen aus mindestens einer Karkasseinlage (2, 3), zwei Kempakete aus Wulstkernen (4) mit Kemprofilen (5), einem Gürtelverband (6), gegebenenfalls mit einer Gürtelbandage (6b), einem Laufstreifen (8) sowie Seitenwandteilen (7) aufgebaut wird,
**dadurch gekennzeichnet,**
**dass** die Karkasseinlage aus zwei Karkasseinlagenteilen (2, 3) gebildet wird, wobei jeder Karkasseinlagenteil (2, 3) auf einer gesonderten Wickeltrommel (11) aufgelegt wird, auf jedem Karkasseinlagenteil (2, 3) eines der Kempakete positioniert wird, der axial innere Abschnitt (2a, 3a) des Karkasseinlagenteils (2, 3) zur Bildung eines Hochschlages umgeschlagen wird, die beiden Karkasseinlagenteile (2, 3) mitsamt den Kempaketen und gegebenenfalls den Seitenwandteilen (7) auf dem Innenkern (10) nacheinander, unter gegenseitiger Überlappung im Zenit des Innenkernes (10), positioniert werden, und anschließend der Gürtelverband (6) und der Laufstreifen (8) aufgebracht werden.

2. Verfahren nach Anspruch 1, **dadurch gekennzeichnet, dass** die gegenseitige Überlappung der Karkasseinlagenteile (2, 3) im Wesentlichen über die Breite des Gürtelverbandes (6) erfolgt.

3. Verfahren nach Anspruch 1 oder 2, **dadurch gekennzeichnet, dass** vor dem Aufbringen des Karkasseinlagenteils (2, 3) auf der Wickeltrommel (11) das Seitenwandprofil (7) positioniert wird.

4. Verfahren nach einem der Ansprüche 1 bis 3, **dadurch gekennzeichnet, dass** die Innenschicht aus zwei Innenschichtteilen (1a, 1b) aufgebaut wird, von welchen der eine Teil (1a) vor dem Auflegen des Karkasseinlagenteils (2, 3) dort positioniert wird, wo der innere Abschnitt des Karkasseinlagenteils (2, 3) aufgelegt wird, und der zweite Teil (1b) außerhalb der Position des Kempaketes auf dem Karkasseinlagenteil (2, 3) aufgelegt wird.

5. Verfahren nach einem der Ansprüche 1 bis 3, **dadurch gekennzeichnet, dass** die Innenschicht durch Aufbringen, insbesondere Aufsprühen, einer Kautschukmischungslösung auf den Innenkern (10) gebildet wird.

6. Verfahren nach einem der Ansprüche 1 bis 5, **dadurch gekennzeichnet, dass** ein im Bereich des Äquators in zwei oder mehr Teile geteilter Innenkern (10) verwendet wird, dessen Teile in axialer Richtung gegeneinander verschiebbar und in unterschiedlichen Positionen fixierbar sind.

7. Fahrzeugluftreifen, welcher nach dem Verfahren gemäß einem oder mehreren der Ansprüche 1 bis 6 hergestellt ist.
